# EUROPEAN PATENT SPECIFICATION

(11) **EP 0 579 860 B1**
(45) Date of publication and mention of the grant of the patent: **18.02.1998**
(21) Application number: 92112714.8
(22) Date of filing: 24.07.1992
(51) Int. Cl.: F02F 1/42, F02B 31/00

(54) **Induction system for an internal combustion engine**
Einlasssystem für eine Brennkraftmaschine
Système d'admission d'un moteur à combustion interne

(43) Date of publication of application: 26.01.1994
(73) Proprietor: YAMAHA HATSUDOKI KABUSHIKI KAISHA, Iwata-shi Shizuoka-ken, 438 (JP)
(72) Inventor: Isaka, Yoshiharu, c/o Yamaha Hatsudoki K.K., Iwata-shi, Shizuoka-ken 438 (JP); Ito, Masahiro, c/o Yamaha Hatsudoki K.K., Iwata-shi, Shizuoka-ken 438 (JP)
(74) Representative: Grünecker, Kinkeldey, Stockmair & Schwanhäusser Anwaltssozietät

(56) References cited:
- EP-A- 0 076 632
- EP-A- 0 500 123
- WO-A-91/14858
- GB-A- 2 242 226
- US-A- 4 015 577
- US-A- 4 274 368
- US-A- 4 413 598

## Description

The present invention relates to an internal combustion engine comprising a cylinder block and a cylinder head defining at least partially a combustion chamber and an intake system comprising an intake passage extending through the cylinder head and having an inlet opening for receiving an intake charge and an outlet opening for delivering said charge to said combustion chamber, wherein a portion of said intake passage downstream of said inlet opening defining a generally straight section, and means for changing the effective angle and/or shape of said straight section of the intake passage during the running of the engine for redirecting the charge flow passing through said straight section of the intake passage, said means for changing the angle and/or shape of the straight section of the intake passage comprise a movable wall partially defining the intake passage provided by a control valve assembly having a rotatable valve member which forms part of the wall of the intake passage.

As is well known, many factors in the design of an internal combustion engine affect their performance. Also, the design of certain factors to achieve optimum performance at one speed and/or load range may deteriorate performance at other speed and load ranges. A typical example of this is the design of the induction system. In order to provide maximum power output, the induction system should provide good charging efficiency which necessitates the absence of turbulence in the intake charge. However, if no turbulence is generated in the induction system and combustion chamber under low speed low load conditions, poor combustion and performance can result. There have, therefore, been proposed systems for cooperation with the induction system to generate turbulence under only certain running conditions. Examples of such induction systems may be found in the co-pending European patent application EP-A-500124 and EP-A-500123.

In the arrangements shown in those applications, a control valve is provided in the induction passage which is generally positioned at a point adjacent where the induction passage communicates with the valve seat of the cylinder head and at an area where the intake passage has a generally angularly related shape with the control valve positioned at the bight. Although this arrangement is extremely effective in providing the desired degrees and types of turbulence in the combustion chamber under low and mid range performance and no turbulence at high speeds, the flow control pattern which can be accomplished with this type of control valve has some restrictions.

In addition to the question of generating turbulence in the combustion chamber, it is also the practice to tune the length and effective cross-sectional area of the intake passage so as to achieve maximum volumetric efficiency. However, an induction system that is tuned to achieve maximum volumetric efficiency and power at the high speed will be relatively inefficient for charging at low speeds and low load conditions. Although arrangements have been incorporated for changing the tuning of an individual intake passage, this has been done conventionally by changing the effective length of the passage. However, such length changing devices add to the bulk of the induction system with obvious disadvantages.

Specifically, it may be desirable to provide an arrangement wherein the actual shape of the intake passage may be reconfigured so as to change the direction in which the flow passes through the valve seat and also to tune the intake passage for different speed and load conditions.

Document WO-A-91/14858 discloses an internal combustion engine according to the preamble of claim 1. This document discloses an adjustable baffle which deflects the flow of gas to an intake valve, so that the gas is directed past the valve into the combustion chamber whereby a swirling motion of the gases within the combustion chamber may be increased. The baffle may be retracted above a predetermined engine speed or its angle may be gradually reduced as engine speed rises.

Therefore, this baffle is not capable of imparting a swirling motion at high engine speeds, as a result, especially at high loads and high speeds, flame propagation will be quite slow and very poor running will result.

Accordingly, it is an objective of the present invention to provide an improved internal combustion engine as indicated above which always allows the induction system, specifically the intake port configuration and the flow pattern generated therein to be changed during engine operating and adapted to the actual needs of a current engine operating condition without rendering the cylinder head configuration unduly complicated.

According to the present invention, this objective is solved for an internal combustion engine as indicated above in that said valve member is rotatable about an axis which extends substantially in parallel to a flow axis of said straight section of the intake passage.

According to a preferred embodiment of the present invention, a movable wall is provided by said control valve assembly which may be operated in response to the engine running conditions, such as engine speed or engine load.

When the valve member has a substantially cylindrical configuration with cut-out portions on one side thereof, and said valve member being rotatably supported within a bore formed in a cylinder head, a very effective control is facilitated and simultaneously the production of such a valve member is very easy.

Accordingly, it is an objective of the present invention to provide an improved internal combustion engine as indicated above which allows the induction system, specifically the intake port configuration and the flow pattern generated therein, to be changed during engine operating and adapted to the actual needs of a current engine operating condition without rendering the cylinder head configuration unduly complicated.

By means of adapting the effective cross-section or shape of the intake passage in response to the engine running conditions to achieve turbulence of the desired type in the combustion chamber and to improve volumetric efficiency at low and mid range performance while providing a substantially uninterrupted introduction of charge under high speed running improves the engine performance throughout the entire engine load and speed ranges.

Other preferred embodiments of the present invention are laid down in the further subclaims.

In the following, the present invention is explained in greater detail with respect to several embodiments thereof in conjunction with the accompanying drawings, wherein:
Figure 1 is a partial cross-sectional view taken through a portion of a cylinder of a multiple cylinder internal combustion engine constructed in accordance with a first embodiment of the invention.
Figure 2 is an enlarged cross-sectional view taken along the line 2-2 of Figure 1.
Figure 3 is an enlarged cross-sectional view taken along the line 3-3 of Figure 1 showing the control valves in their first positions.
Figure 4 is an enlarged cross-sectional view taken along the line 4-4 of Figure 1 showing the control valves in their first positions.
Figure 5 is a cross-sectional view, in part similar to Figure 3, showing the control valves in their second positions.
Figure 6, is a cross-sectional view, in part similar to Figure 4, showing the control valves in their second positions.
Figure 7 is a partially schematic view showing the mechanism for actuating the control valve and its interrelationship to the exhaust control valve.
Figure 8 is a graphical view showing the volumetric efficiency in relation to engine speed and also the positioning of the control valves.
Figure 9 is a top plan view, with a portion broken away, showing the exhaust system converter and exhaust control valve as may be used with the embodiments of this invention.
Figure 10 is a side elevational view of the portion of the exhaust system shown in Figure 9, with another portion broken away.
Figure 11 is a cross-sectional view, in part similar to Figure 1, and shows another embodiment of the invention.
Figure 12 is a cross-sectional view taken along the line 10-10 of Figure 11.
Figures 13 and 14 are cross-sectional views corresponding to Figures 3 and 4, but for this embodiment.
Figure 15 is an enlarged cross-sectional view, in part similar to Figures 1 and 11 and shows another embodiment of the invention.
Figure 16 is an exploded perspective view showing the interrelationship between the rectifier plate and the control valve in this embodiment, and
Fig. 17 is a cross-sectional view along the line A-A in Fig. 15 for the intake passage to elucidate collaboration between the rectifier plate and the control valve member.

### DETAILED DESCRIPTION OF THE PREFERRED EMBODIMENTS OF THE DRAWINGS

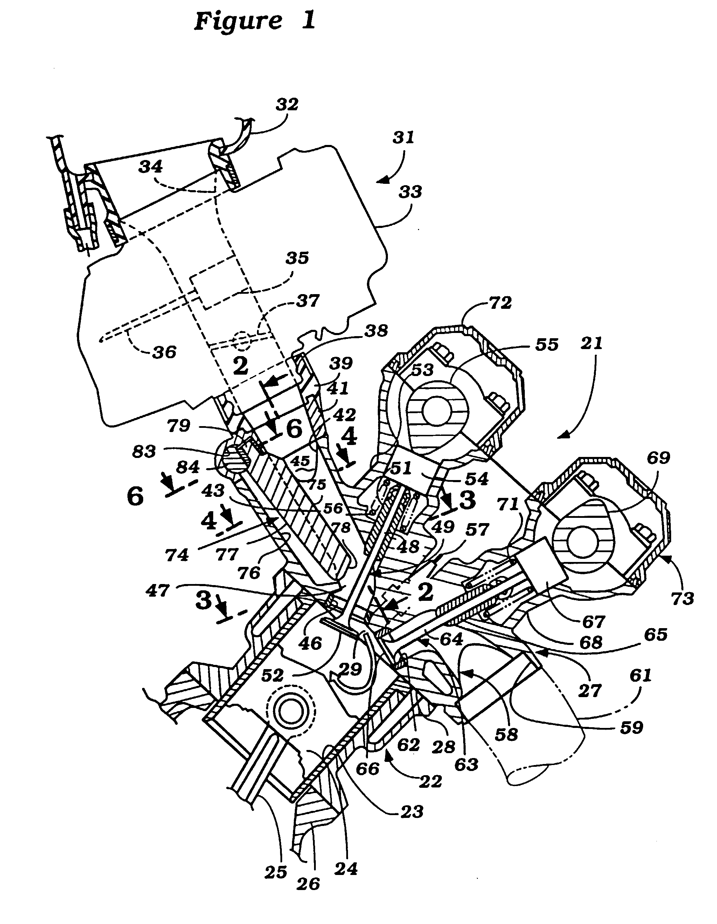

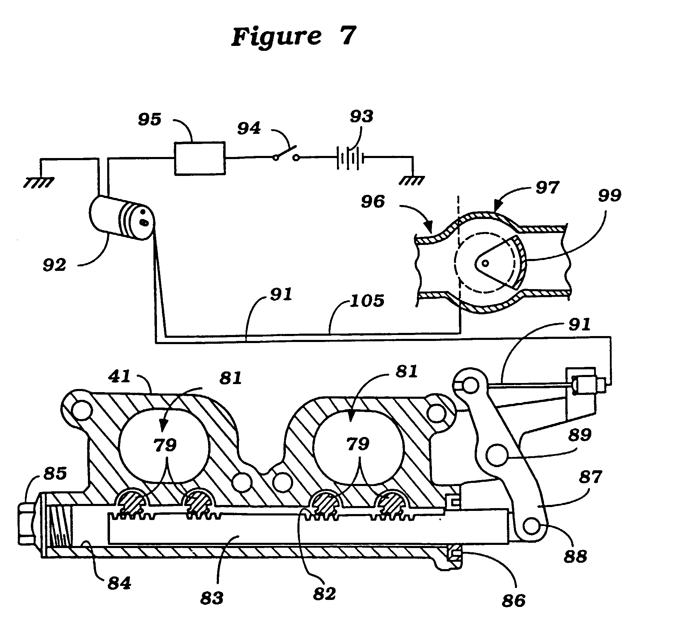

Referring first to the embodiment of Figures 1-8 and initially primarily to Figure 1, a four cylinder in-line reciprocating engine constructed in accordance with this embodiment is shown partially and is identified generally by the reference numeral 21. Since the invention is concerned primarily with the induction system and its interrelationship with the exhaust system, only the upper portion of the engine has been illustrated. Also, the construction has been shown primarily by reference to cross sections taken through a single cylinder or through adjacent cylinders of the engine 21. It is believed that this description will permit those skilled in the art to understand how the invention can be applied to multiple cylinder engines. In fact, the invention may be employed in conjunction with engines having various cylinder numbers and cylinder types as well as four or two cycle engines.

The engine 21 includes a cylinder block 22 having individual aligned cylinder bores 23 in which pistons 24 are supported for reciprocation. The pistons 24 are connected by means of connecting rods 25 to a crankshaft (not shown) that is journaled for rotation within a crankcase chamber formed by a crankcase member 26 that is affixed to the cylinder block 22 in any appropriate manner.

A cylinder head assembly, indicated generally by the reference numeral 27, is affixed in a suitable manner to the cylinder block 22 with a planar lower surface 28 thereof in sealing engagement with the upper portion of the cylinder block 22 around the cylinder bores 23. Individual recesses 29 are formed in the cylinder head lower surface 28 in registry with the cylinder bores 23 to form the combustion chambers thereof along with the pistons 24.

An induction system, indicated generally by the reference numeral 31 and constructed in accordance with an embodiment of the invention is provided for delivering a fuel/air charge to the combustion chambers and specifically the recesses 29. This induction system 31 includes an air inlet device, shown partially and identified by the reference numeral 32, which draws atmospheric air in a well known manner. If desired, the air inlet device 32 may include a silencing system and also an air cleaner and filter system.

A plurality of carburetors 33, one for each of the cylinder bores 23 in the illustrated embodiment, draw air from the air inlet device 32 through their air horns 34. In the illustrated embodiment, the engine 21 is designed for motorcycle application and the carburetors 33 are of the well known sliding piston type, including a sliding piston 35 that controls a metering rod 36 in a well known manner. A manually operated throttle valve 37 of each carburetor 33 is operated from a remote accelerator control, in a well known manner.

Although this embodiment is described in conjunction with a motorcycle type of application, it should be readily apparent to those skilled in the art that the invention may be employed with various other applications for internal combustion engines. The invention, however, has particular utility in use with motor vehicles because of the fact that a motor vehicle operates over widely different speed and load ranges. The induction system of the present invention has particular utility in ensuring good operation over such widely varying running conditions.

Each carburetor 33 has an outlet portion 38 which is telescopically received in an adaptor 39 for connection to the cylinder head 27 in a manner which will be described. The adaptor 39 cooperates with a combined control valve support and control valve actuator arrangement 41 which has an intake passage that is mated with a corresponding inlet opening 42 of the cylinder head 27.

In the illustrated embodiment, the cylinder head 27 is formed with two intake valves per cylinder and to this end the inlet opening 42 serves a pair of parallel intake passages 43 that are formed in side-by-side relationship in the cylinder head 27. The passages 43 are separated from each other by an internal wall 44 that terminates short of the opening 42 so as to form a communicating passageway 45.

Each intake passage 43 has a generally straight section that extends downwardly toward the cylinder head recess 29. Each passage 43 terminates at a valve seat formed by an insert 46. The inserts 46 are formed at an end of a section 47 that joins the straight section at an obtuse angle as clearly seen in Figure 1.

A pair of poppet type intake valves, indicated generally by the reference numerals 48 have stem portions 49 that are slidably supported within valve guides 51 pressed into the cylinder head 27 for reciprocally supporting the intake valves 48. These valves have head portions 52 that cooperate with the valve seats 46 to open and close the communication of the intake passages 43 with the combustion chamber recesses 29.

The cylinder head 27 has an intake cam tower 53 that has bores which slidably support thimble tappets 54, each associated with a respective one of the intake valves 48. An intake camshaft 55 is rotatably journaled within the cam tower 53 in a suitable manner and has lobes which engage the thimble tappets 54 for opening the intake valves 48. Coil compression springs 56 normally urge the intake valves 48 to their closed position, as is well known in this art.

The fuel/air charge which has been drawn into the combustion chambers through the open intake valves 48 is fired by means of spark plugs 57 mounted in the cylinder head 27 with their gaps extending into the recesses 29. The spark plugs 57 are fired by a suitable ignition system.

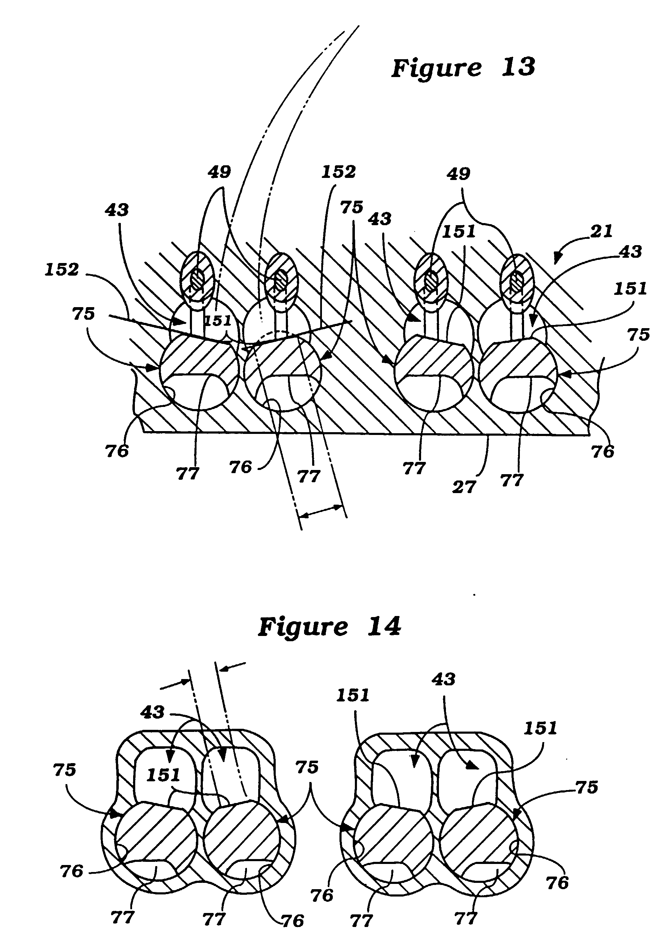

The burnt charge is discharged from the combustion chamber through exhaust passages 58 formed in the side of the cylinder head 27 opposite from the intake passages 43. As with the intake passages 43, there may be provided any number of exhaust passages 58 and the illustrated embodiment shows two per cylinder. These exhaust passages 58 merge into a common exhaust port 59 formed in the exhaust side of the engine to which a manifold 61, which will be described in more detail later by reference to Figures 13 and 14, is affixed.

The exhaust passages 58 terminate in exhaust ports formed by exhaust valve seats 62 that are pressed into the cylinder head 27. Exhaust valves 63 have valve stems 64 that are slidably supported in pressed-in guides 65. The exhaust valves 63 have heads 66 that cooperate with the valve seats 62 to open and close the exhaust passages 58.

A plurality of thimble tappets 67 are slidably supported in bores formed in a cam tower 68 on the exhaust side of the engine 21. The thimble tappets 67 are operated by an exhaust camshaft 69 that is rotatably journaled in the cam tower 68. Coil compression springs 71 normally urge the exhaust valves 63 to their closed positions. The cam towers 53 and 68 are closed by respective cam covers 72 and 73 that are affixed to the cylinder head 27 in an appropriate manner. The camshafts 55 and 69 are driven from the engine crankshaft by any suitable means.

The construction of the engine 21 as thus far described may be considered to be conventional. For this reason, further details of the conventional components of the engine have not been illustrated nor will they be described since they are not necessary to understand the construction and operation of the invention.

With a conventional engine of the type as thus far described, the intake passages 43 are designed so as to be relatively straight, as aforenoted, and provide good charging efficiency for the combustion chamber 29. This will provide high power outputs to be reached. However, because of the good charging efficiency, when the engine 21 is running at low speeds, there will be no turbulence generated within the combustion chamber 29. As a result, flame propagation will be quite slow and very poor running will result. In addition, the length and cross-sectional area of the intake passages 43 are tuned to produce maximum charging efficiency at high speeds and high loads. As a result, the charging efficiency at lower speeds and lower loads will not be as effective.

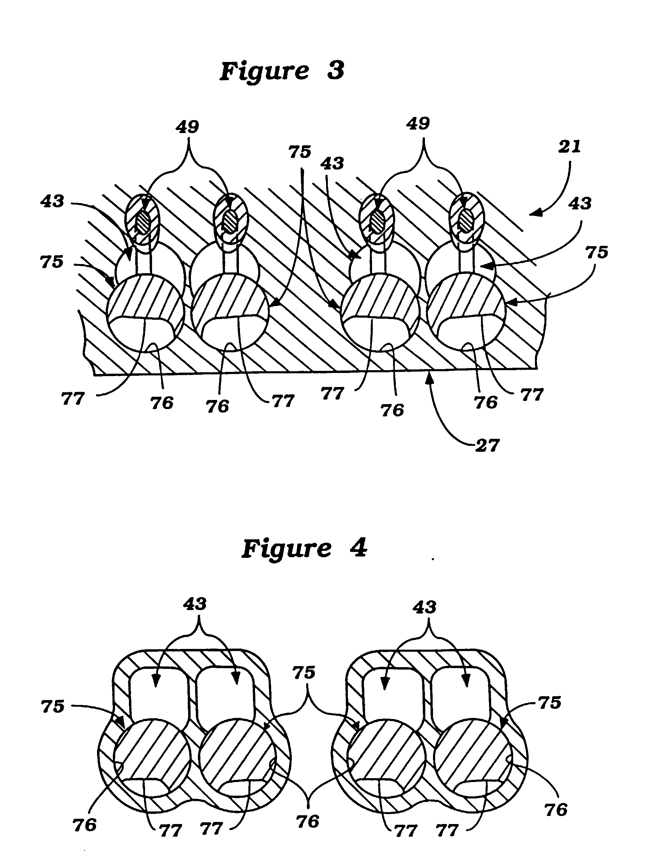

To avoid these problems and produce good performance under all running conditions, the induction system includes a pair of control valve assemblies, each indicated by the reference numeral 74, which are mounted in the intake passages 43 in such a way as to change not only the effective cross-sectional area but also the shape of the passages 43. These control valve assemblies 74 include control valve elements 75 which have a partially cylindrical configuration as best shown in the cross-sectional views of Figures 3-6. These valve elements 75 are mounted within bores 76 formed in the cylinder head 27 in a relationship so that they extend substantially parallel to the central axis of the intake passages 43. Thus, the valve elements 75 rotate about axes which are generally parallel to the axes of the intake passages 43. However, the control valves 75 are provided with cut out portions 77 on one side thereof.

When the control valves 74 are positioned as shown in Figures 1-4, the cylindrical surfaces of the valves 74 protrude into the intake passages 43 and, in effect, change the configuration and effective cross-sectional are of these intake passages 43 as well as shift their central flow axis toward one side of the valve inserts 46. As a result of this, the intake air flow through the passages 43 will be at a higher velocity than when the valves 74 are in their opposite position, to be described, and the flow direction entering the combustion chamber 29 will be as shown by the arrow in Figure 1. This will generate a tumble action within the combustion chamber 29 that will be maintained and in fact, accelerate as the pistons 24 approach top dead center position. As a result, there will be a high degree of turbulence and the combustion which occurs in the combustion chamber will propagate rapidly so as to ensure complete and good combustion. Also, as will be noted, the charging efficiency of the intake passages 43 will be improved.

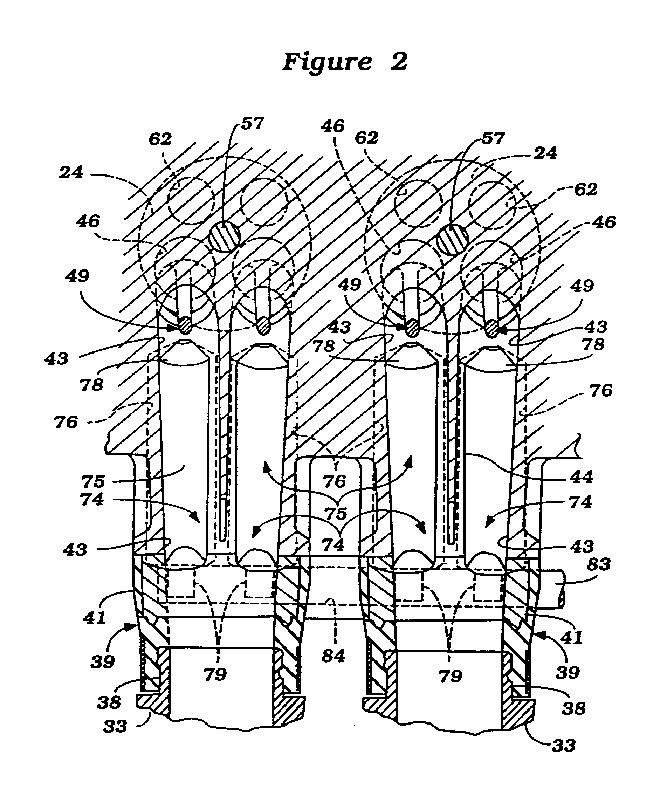

It should be noted that the lower ends of the control valves 74 are provided with a rounded area 78 (Figures 1 and 2) that causes the transition from the straight portion of the intake passage 43 to that section 47 merging at the valve seat or insert 46 so as to provide a smooth flow path and not interfere with the turbulence generated.

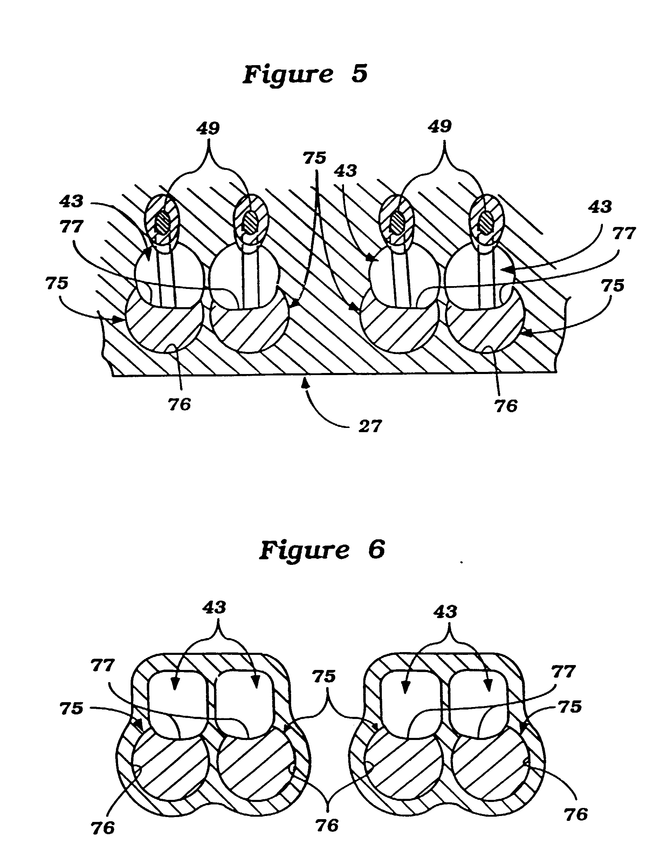

The control valves 74 may be rotated through 180° from the position shown in Figures 3 and 4 to the positions shown in Figures 5 and 6 by a construction which will be described. When so rotated, the cut out portion 77 will register with the intake passages 43 and the intake passages 43 will be unobstructed and the flow axes will move more toward the center of the intake valves 48 so as to eliminate the tumble action and provide full and complete charging.

The structure by which the control valves 74 or the valve elements 75, respectively are rotated will now be described by primary reference to Figures 1, 2 and 7. The upper ends of the control valve elements 75 are provided with generally cylindrical portions 79 that are journaled in suitable bores in the member 41. This journaling is accomplished adjacent intake passages 81 formed in the member 41 that meet with the inlet openings 42 of the intake passages 43 in the cylinder head 27 and with the discharge of portion 38 of the carburetors 33 and corresponding openings in the adaptors 39.

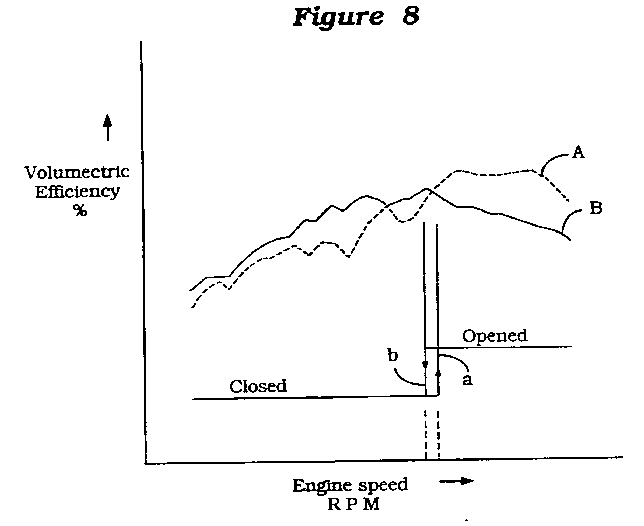

These portions 79 are formed with spur gear teeth which are engaged with teeth 82 of a cylindrical rack 83 that is slidably supported in a bore 84 that extends transversely across the member 41. The bore 84 is closed at one end by a closure plug 85 and the rack 83 extends through a seal 86 at the other end of the bore 84. This exposed end of the rack 83 is connected to one end of a bell crank 87 by a pivot pin 88. The bell crank 87 is pivotally supported on the member 41 by means of a pivot pin 89 and its other end is connected to one end of a Bowden wire actuator 91. The opposite end of the Bowden wire actuator 91 is connected to an electric stepping motor 92. The stepping motor 92 is energized by a battery 93 through a main switch 94 and controller 95. The controller 95 operates with a strategy which may be best understood by reference to Figure 8.

Figure 8 is a volumetric efficiency curve for the engine 21 operating at wide open throttle 37. Two curves are shown in Figure 8, a broken line curve A which is the volumetric efficiency curve generated by the engine 21 when the control valve elements 75 are in their fully opened positions as shown in Figures 5 and 6. The other curve, the solid line curve B, is the volumetric efficiency curve when the control valve elements 75 are in their closed positions as shown in Figures 1-4. It should be readily apparent that when the control valve elements 75 are in their closed positions, the volumetric efficiency B is better at low engine speeds and loads than if the control valve elements 75 were in their fully opened positions. In addition to the differences in volumetric efficiency, the configuration of the intake passages 43 when the control valve elements 75 are in their closed positions will generate more turbulence in the combustion chambers 29 which also improves combustion at low speeds but can reduce intake efficiency at high speeds. It should also be noted that torque curves for the engine 21 when the control valve elements 75 are in their opened and closed positions would be quite similar to the volumetric efficiency curves.

However, at a certain engine speed the volumetric efficiency of the engine 21 when the control valve elements 75 are in their closed positions begins to fall off. It is at this point that the control strategy operates to open the control valve elements 75 to their positions of Figures 5 and 6. When the engine speed is increasing, the control valve elements 75 are moved to their opened positions when the engine 21 reaches a speed a which is somewhat higher than the speed b at which the control valve elements 75 are closed when the engine speed is decreasing. This slight hysteresis in the opening and closing is done so as to improve transition.

The actual speed at which the control valve elements 75 are opened and/or closed depends not just on speed but also on load. Therefore, the controller 95 is provided with maps indicative of both engine speed and engine load so as to achieve good running under all conditions. Basically, the control valve elements 75 are closed at low loads in mid range speed conditions and at almost all loads at low speed conditions. Generally, the valve closing occurs at a higher speed as the load decreases, although various control strategies may be employed.

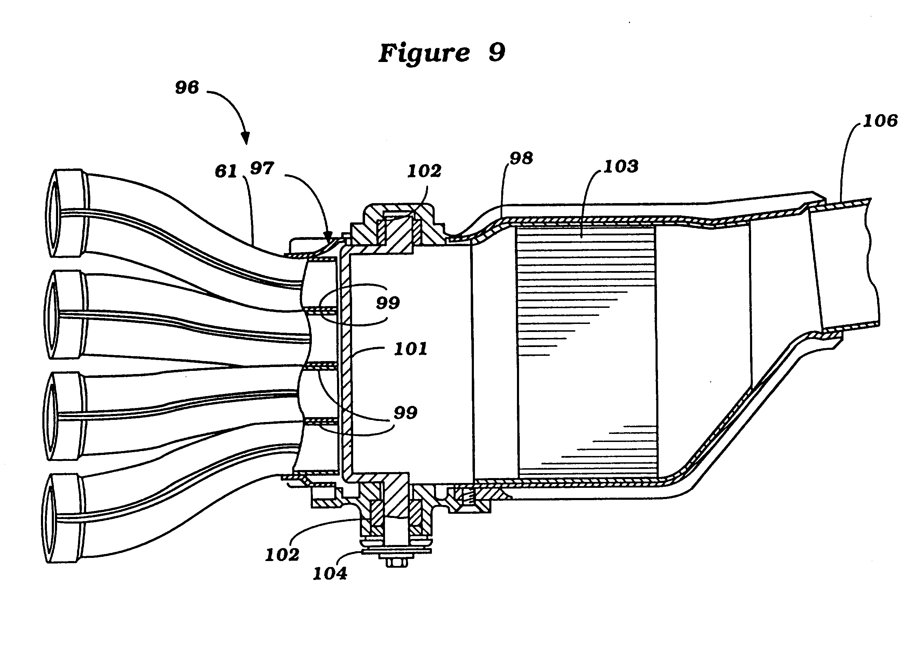

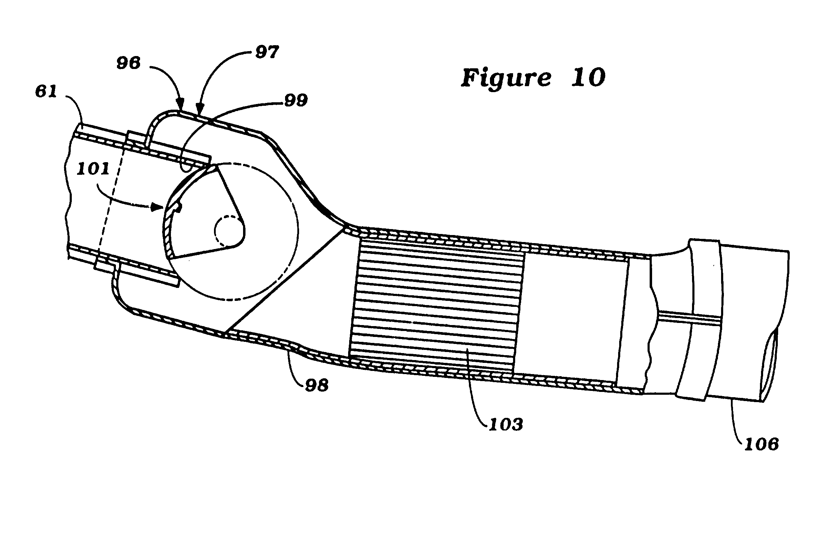

The exhaust system and exhaust control valve 63 employed with this embodiment will now be described by particular reference to Figures 9 and 10. The exhaust system is indicated generally by the reference numeral 96 and includes the exhaust manifold's runners 61 previously noted. These runners 61 terminate in a combined expansion chamber catalytic converter assembly, indicated generally by the reference numeral 97. Specifically, the converter assembly 97 includes an outer housing 98 with the manifold runners 61 extending through a front wall thereof so that their outlet openings 99 communicate directly with the interior of the expansion chamber formed by the housing 98.

An arcuate exhaust control valve element 101 is mounted by means of a pair of spaced apart bearings 102 formed in the housing 98 so that when it is in its reflective position as shown in Figures 9 and 10, it will extend across a portion of the openings 99 and cause a reflective sound wave to emanate back to the exhaust ports 59 to improve running under low speed conditions. Because of this improved running generated by the use of the control valve 101 and also the control valve elements 75 in the intake passages 43, the engine 21 can run with a lean charge. In order to ensure good operation of a catalytic or catalyzer bed 103 positioned within the housing 98, the manifold sections 61 can be kept quite short and the catalyzer bed 103 can be positioned extremely close to the exhaust passages 58 so as to operate at high efficiency.

A pulley 104 is affixed to one end of the control valve 101 and is operated also by the servo motor 92 through a boden wire cable 105. Although both the exhaust control valve 101 and the intake control valve element 75 may be operated by the same servo motor 92, it is preferred to employ separate servo motors so that different control strategies may be employed for the exhaust control valve 101 than the intake control valve elements 75.

A tail pipe 106 extends from the control valve 101 and catalyzer bed 103 and discharges the exhaust gases to the atmosphere. An appropriate muffler (not shown) may be positioned in this exhaust system 96.

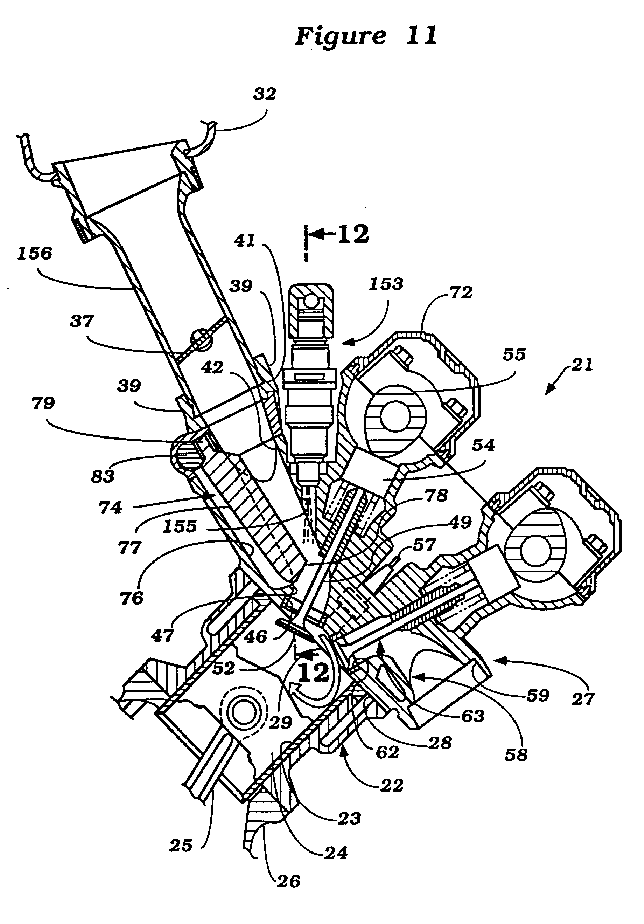

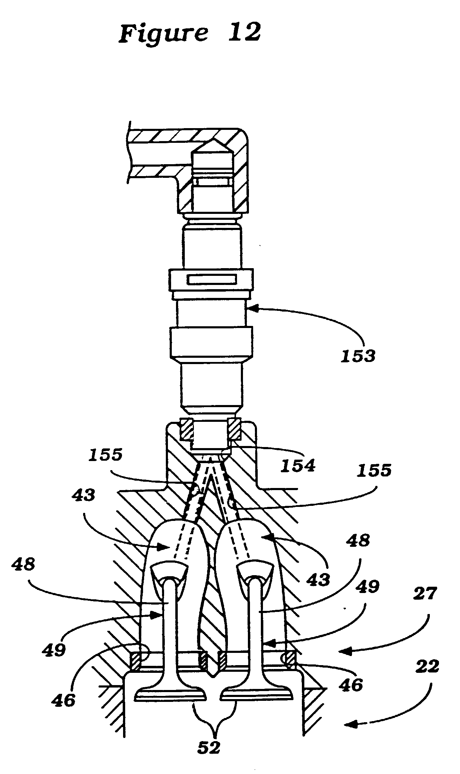

Figures 11-14 show another embodiment of the invention which is generally the same as the embodiment of Figures 1-10. For that reason, components of this embodiment which are the same as the previous embodiment have been identified by the same reference numerals and will not be described again, except insofar as is necessary to understand the construction and operation of this embodiment.

The first significant difference between this embodiment and that of the previously described embodiment is that the control valve elements 75 are configured so as to direct the flow of air into the combustion chamber 29 more toward the center of the combustion chamber 29 than the previously described embodiment. To achieve this purpose, the cylindrical portions of the control valve elements 75 are formed with cut outs or flats 151 which are disposed at an angle to each other as shown by the lines 152 in Figure 13. This causes the intake air charge to be directed more centrally of the combustion chamber 29 when the control valve elements 75 are in their closed positions as shown in Figures 13 and 14.

Aside from this difference, the construction and operation of the control valves 74 is as previously described and, for that reason, further description of the control valve structure of this embodiment is not believed to be necessary.

This embodiment also differs from the previously described embodiment in that a carburetor is not employed, but rather the charge is supplied by fuel injectors 153 which are mounted in the cylinder head 27 between the intake cam tower 53 and the portion of the cylinder head 27 forming the intake passages 43. A single fuel injector 153 is provided for both intake passages 43 serving the same combustion chamber 29 and as a result, the fuel injector 153 injects into a chamber 154 from which a pair of supply passages 155 radiate, each of which intersects one of the intake passages 43 adjacent the downstream position of the control valve 74. Rather than using a single fuel injector 153 for both intake passages 43, it is to be understood that a separate fuel injector may be provided for each intake passage 43.

Since no carburetors are employed, the intake air charge is delivered to the induction system from the air inlet device 32 by means of trumpets 156 in which the throttle valves 37 are positioned.

In the embodiments of the invention as thus far described, it should be readily apparent that the control valves 74 are very effective when in their closed positions to direct the flow to one side of the valve seats 46 so as to generate a tumble action in the combustion chamber 29 and to improve volumetric efficiency under low and mid range running. It should be noted, however, that the other side of the valve seat 46 is generally open when the control valves 74 are closed and, therefore, the full benefits of the control valve 74 may not be realized.

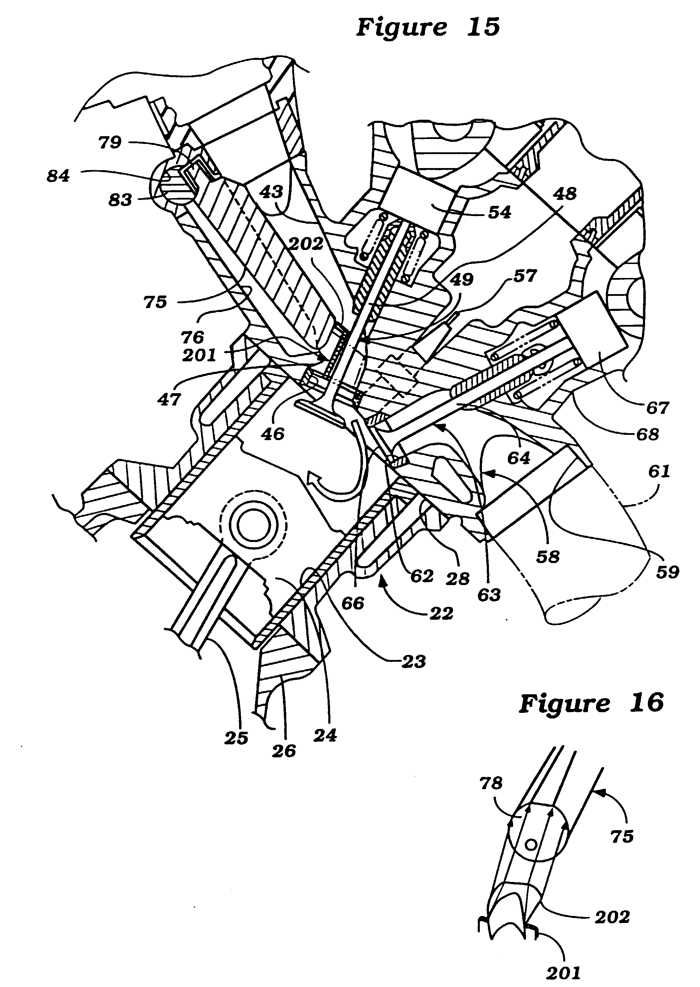

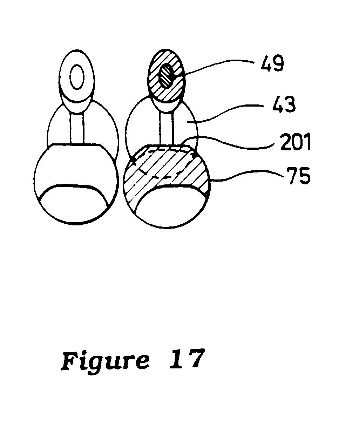

Figures 15 to 17 show another embodiment of the invention wherein there is provided a rectifier plate, indicated generally by the reference numeral 201 that is positioned in the bore in which the valve seats 46 are positioned and are retained in place by the valve seats 46. The rectifier plate 201 has a portion 202 that forms an extension of the cylindrical portion of the control valve elements 75 when the control valves 74 are in their closed positions as shown in Figure 15 so as to effectively channel all of the air on the back side of the rectifier plate 201 and to further stimulate the tumble action generated in the combustion chamber 29.

When the control valves 74 are in their open positions, the rectifier plate 201 does not offer any significant air flow resistance to the air flow through the intake passages 43 and, therefore, there is no detrimental effect. In fact, even in this position the rectifier plate 201 may assist in controlling the air flow into the combustion chamber 29 so as to provide good induction and avoid turbulence when it is not desired.

It should be readily apparent from the foregoing description that the described embodiments of the invention are very effective in providing turbulence generated by tumble action in the combustion chamber and improve volumetric efficiency when operating at low speeds and low loads and the attainment of maximum power output without any restriction in the induction passage at high speed and high loads. Of course, the foregoing description has been that of preferred embodiments of the invention and various-changes and modifications may be made without departing from the scope of the invention, as defined by the appended claims.

## Claims

1. Internal combustion engine comprising a cylinder block (22) and a cylinder head (27) defining at least partially a combustion chamber (29) and an intake system comprising an intake passage (43) extending through the cylinder head (27) and having an inlet opening (42) for receiving an intake charge and an outlet opening for delivering said charge to said combustion chamber (29), wherein a portion of said intake passage (43) downstream of said inlet opening (42) defining a generally straight section, and means (74,75) for changing the effective angle and/or shape of said straight section of the intake passage (43) during the running of the engine for redirecting the charge flow passing through said straight section of the intake passage (43), said means for changing the angle and/or shape of the straight section of the intake passage (43) comprising a movable wall partially defining the intake passage (43) provided by a control valve assembly (74) having a rotatable valve member (75) which forms part of the wall of the intake passage (43),
**characterized in that**
said valve member (75) is rotatable about an axis which extends substantially in parallel to a flow axis of said straight section of the intake passage (43).

2. Internal combustion engine as claimed in claim 1, **characterized in that** the control valve assembly (74) is operated in response to the engine running conditions, such as engine speed or engine load.

3. Internal combustion engine as claimed in at least one of the preceding claims 1 or 2, **characterized in that** the valve member (75) has a substantially cylindrical configuration with cutout portions (77) on one side thereof, said valve member (75) being rotatably supported within a bore (76) formed in the cylinder head (27).

4. Internal combustion engine as claimed in at least one of the preceding claims 1 to 3, **characterized in that** there are two intake passages (43) each serving the same combustion chamber (29), each of said pair of intake passages (43) being provided with said control valve assembly (74) having the rotatable valve member (75) for changing the effective angle and/or shape of the respective intake passage (43).

5. Internal combustion engine as claimed in at least one of the preceding claims 1 to 4, **characterized in that** each valve member (75) being rotatable through about 180° from a position in which the cylindrical surfaces of the valve members (75) protrude into the intake passages (43) changing the configuration and effective cross sectional area of these intake passages (43) and shifting their central flow axis toward one side of intake valve seats (46), and a position in which cutout portions (77) provided on said valve member (75) are in registry with the intake passages (43) leaving same unobstructed and moving the flow axis more towards the center of the intake valve seats (46).

6. Internal combustion engine as claimed in at least one of the preceding claims 1 to 5, **characterized in that** the downstream ends of the control valve members (75) are provided with a rounded area (78) to provide a transitional flow portion from the straight section of the intake passage (43) to said portion (47) merging at an intake valve seat (46).

7. Internal combustion engine as claimed in at least one of the preceding claims 1 to 6, **characterized in that** the control valve members (75) are configured so as to direct the flow of charge towards the combustion chamber more towards a center thereof by means of cutouts or flats (151) disposed at the cylindrical portions of the valve members (75).

8. Internal combustion engine as claimed in claim 7, **characterized in that** the cutouts or flats (151) of a pair of adjacent valve members (75) forming part of the intake passages (43) feeding the same combustion chamber (29) are disposed at the cylindrical portions of said control valve members (75) at an angle to each other.

9. Internal combustion engine as claimed in at least one of the preceding claims 1 to 8, **characterized in that** the control valve members (75) comprise generally cylindrical portions (79) at their upstream ends that are journalled in suitable bores of a control valve support and actuator arrangement (41) adjacent intake passages (81).

10. Internal combustion engine as claimed in claim 9, **characterized in that** the upstream cylindrical portions (79) of the valve members (75) are formed with spur gear teeth which are in engagement with teeth (82) of a cylindrical rack (83) that is slightably supported in a bore (84) that extends transversely across the control valve support and actuator member (41).

11. Internal combustion engine as claimed in claim 10, **characterized in that** the cylindrical rack (83) is operated through a stepping motor (92) by means of a bowden wire actuator (92), said stepping motor (92) is controlled by a controller means (95).

12. Internal combustion engine as claimed in at least one of the preceding claims 1 to 11, **characterized in that** an exhaust control valve (101) is provided operated by said stepping motor (92) from said controller means (95).

13. Internal combustion engine as claimed in at least one of the preceding claims 1 to 12, **characterized in that** a rectifier plate (201) is provided in conjunction with the valve seats (46) of the intake valves, said rectifier plate (201) comprises a portion (202) that forms an extension of the cylindrical portion of the control valve members (75) when same are in their closed position, said rectifier plate subdividing the flow passage of the intake passages (43) into first and second portions directing the flow of the intake charge only for one of the portions when the control valve member (75) is in its closed flow obstructing position.

## Patentansprüche

1. Brennkraftmaschine mit einem Zylinderblock (22) und einem Zylinderkopf (27), der mindestens teilweise eine Verbrennungskammer (29) und ein Einlaßsystem bildet, welches einen sich durch den Zylinderkopf (27) erstreckenden Einlaßkanal (43) mit einer Einlaßöffnung (42) zum Aufnehmen einer Einlaßladung und eine Auslaßöffnung zum Liefern der Ladung zu der Verbrennungskammer (29) umfaßt, wobei ein Anteil des Einlaßkanals (43) abstromseitig von der Einlaßöffnung (42) einen allgemein geradlinigen Abschnitt bildet, und mit Mitteln (74, 75) zum Ändern des wirksamen Winkels und/oder der Form des geradlinigen Abschnittes des Einlaßkanals (43) während des Maschinenlaufs zum Umrichten des durch den geradlinigen Abschnitt des Einlaßkanals (43) hindurchtretenden Ladungsstroms, wobei die Mittel zum Ändern des Winkels und/oder der Form des geradlinigen Abschnittes des Einlaßkanals (43) eine teilweise den Einlaßkanal (43) bildende bewegbare Wand umfaßt, die durch eine Steuerventilanordnung (74) mit einem drehbaren Ventilelement (75) geschaffen ist, das einen Teil der Wand des Einlaßkanals (43) bildet;
**dadurch gekennzeichnet,**
daß das Ventilelement (75) um eine Achse drehbar ist, die sich im wesentlichen parallel zu einer Strömungsachse des geradlinigen Abschnittes des Einlaßkanals (43) erstreckt.

2. Brennkraftmaschine nach Anspruch 1,
**dadurch gekennzeichnet,** daß die Steuerventilanordnung (74) in Abhängigkeit von den Maschinenlaufbedingungen wie Maschinendrehzahl oder Maschinenlast betrieben wird.

3. Brennkraftmaschine nach mindestens einem der vorangehenden Ansprüche 1 oder 2, **dadurch gekennzeichnet,** daß das Ventilelement (75) eine im wesentlichen zylindrische Gestaltung besitzt mit ausgeschnittenen Teilen (77) an seiner einen Seite, wobei das Ventilelement (75) drehbar in einer in dem Zylinderkopf (27) ausgebildeten Bohrung (76) abgestützt ist.

4. Brennkraftmaschine nach mindestens einem der vorangehenden Ansprüche 1 bis 3, **dadurch gekennzeichnet,** daß zwei Einlaßkanale (43) vorgesehen sind, die jeweils die gleiche Verbrennungskammer (29) bedienen, und daß jeder des Paares von Einlaßkanälen (43) mit der Steuerventilanordnung (74) mit dem drehbaren Ventilelement (75) zum Ändern des wirksamen Winkels und/oder der Form des jeweiligen Einlaßkanals (43) versehen ist.

5. Brennkraftmaschine nach mindestens einem der vorangehenden Ansprüche 1 bis 4, **dadurch gekennzeichnet,** daß jedes Ventilelement (75) von einer Position, in der die zylindrischen Flächen des Ventilelementes (75) in die Einlaßkanale (43) vorstehen und die Gestaltung und die wirksame Querschnittsfläche dieser Einlaßkanale (43) ändern und deren zentrale Strömungsachse zu einer Seite der Einlaßventilsitze (46) hin verschieben, und einer Position, in der die ausgeschnittenen Teile (77) an dem Ventilelement (75) in Ausrichtung mit den Einlaßkanälen (43) sind, diese ungehindert lassen und die Strömungsachse mehr zur Mitte der Einlaßventilsitze (46) hin bewegen, durch etwa 180° drehbar ist.

6. Brennkraftmaschine nach mindestens einem der vorangehenden Ansprüche 1 bis 5, **dadurch gekennzeichnet,** daß die abstromseitigen Enden der Steuerventilteile (75) mit einer abgerundeten Fläche (78) versehen sind, um einen Übergangsströmungsabschnitt von dem geradlinigen Abschnitt des Einlaßkanals (43) zu dem bei dem Einlaßventilsitz (46) übergehenden Anteil (47) zu schaffen.

7. Brennkraftmaschine nach mindestens einem der vorangehenden Ansprüche 1 bis 6, **dadurch gekennzeichnet,** daß die Steuerventilelemente (75) so gestaltet sind, daß sie den Ladungsstrom zu der Verbrennungskammer mittels an den zylindrischen Anteilen der Ventilelemente (75) angeordneten Ausschnitten oder Flachstellen (151) mehr zu einer Mitte derselben richten.

8. Brennkraftmaschine nach Anspruch 7, **dadurch gekennzeichnet,** daß die Ausschnitte oder Flachstellen (151) eines Paares benachbarter Ventilelemente (75), die Teile der die gleiche Verbrennungskammer (29) speisenden Einlaßkanale (43) bilden, an den zylindrischen Teilen der Steuerventile (75) mit einem Winkel zueinander angeordnet sind.

9. Brennkraftmaschine nach mindestens einem der vorangehenden Ansprüche 1 bis 8, **dadurch gekennzeichnet,** daß die Steuerventilteile (75) allgemein zylindrische Anteile (79) an ihren zustromseitigen Enden umfassen, die in entsprechenden Bohrungen einer Steuerventil-Stütz- und -Betätiger-Anordnung (41) benachbart den Einlaßkanälen (81) gelagert sind.

10. Brennkraftmaschine nach Anspruch 9, **dadurch gekennzeichnet,** daß die zustromseitigen zylindrischen Teile (79) der Ventilelemente (75) mit Stirnradgetriebezähnen versehen sind, die sich in Eingriff mit Zähnen (82) einer zylindrischen Zahnstange (83) befinden, die gleitend in einer sich quer zu dem Steuerventil-Stütz- und -Betätigerteil (41) erstreckenden Bohrung (84) abgestützt ist.

11. Brennkraftmaschine nach Anspruch 10, **dadurch gekennzeichnet,** daß die zylindrische Zahnstange (83) durch einen Schrittmotor (92) mittels eines Bowdenzugstellgliedes (92) betätigt wird, wobei der Schrittmotor (92) durch eine Steuereinrichtung (95) gesteuert wird.

12. Brennkraftmaschine nach mindestens einem der vorangehenden Ansprüche 1 bis 11, **dadurch gekennzeichnet,** daß ein Abgas-Steuerventil (101) vorgesehen ist, das über den Schrittmotor (92) von der Steuereinrichtung (95) betätigt wird.

13. Brennkraftmaschine nach mindestens einem der vorangehenden Ansprüche 1 bis 12, **dadurch gekennzeichnet,** daß eine Gleichrichterplatte (201) in Verbindung mit den Ventilsitzen (46) der Einlaßventile vorgesehen ist, welche Gleichrichterplatte (201) einen Anteil (202) umfaßt, der eine Verlängerung des zylindrischen Anteils der Steuerventilteile (75) bildet, wenn diese sich in ihrer geschlossenen Position befinden, welche Gleichrichterplatte den Strömungskanal der Einlaßkanale (43) in erste und zweite Abschnitte teilt, die die Strömung der Einlaßladung nur für einen der Anteile richtet, wenn das Steuerventilteil (75) in seiner geschlossenen Strömungsbehinderungs-Position ist.

## Revendications

1. Moteur à combustion interne comprenant un bloc de culasse (22) et une tête de cylindre (27) définissant au moins partiellement une chambre de combustion (29) et un système d'admission comprenant un passage d'admission (43) s'étendant dans la tête de cylindre (27) et possédant un orifice d'admission (42) pour recevoir une charge d'admission et un orifice de sortie pour délivrer ladite charge à ladite chambre de combustion (29), dans lequel une partie de ce passage d'admission (43) en aval de l'orifice d'admission (42) définit une section généralement droite, et des moyens (74, 75) destiné à modifier l'angle réel et/ou la fore de ladite section droite du passage d'admission (43) pendant le fonctionnement du moteur afin de rediriger l'écoulement de charge traversant ladite section droite du passage d'admission (43), ces moyens de modification de l'angle et/ou de la forme de la section droite du passage d'admission (43) comprenant une paroi mobile qui définit partiellement le passage d'admission (43) ménagé par un dispositif de soupape de réglage (74) possédant un élément formant soupape pouvant être mis en rotation (75) qui fait partie de la paroi du passage d'admission (43), caractérisé en ce que ledit élément formant soupape (75) peut être mis en rotation autour d'un axe qui s'étend sensiblement parallèlement à un axe d'écoulement de ladite section droite du passage d'admission (43).

2. Moteur à combustion interne selon la revendication 1, caractérisé en ce que le dispositif de soupape de réglage (74) est activé en réaction aux conditions de fonctionnement du moteur, telles que la vitesse du moteur ou la charge du moteur.

3. Moteur à combustion interne selon l'une au moins des revendications précédentes 1 ou 2, caractérisé en ce que l'élément formant soupape (75) a une configuration sensiblement cylindrique comportant des parties découpées (77) sur un côté, ledit élément formant soupape (75) étant supporté de façon à pouvoir être mis en rotation à l'intérieur d'un alésage (76) formé dans la tête de cylindre (27).

4. Moteur à combustion interne selon l'une au moins des revendications précédentes 1 à 3, caractérisé en ce qu'il y a deux passages d'admission (43) desservant chacun la même chambre à combustion (29), chacun de ces deux passages d'admission (43) étant doté du dispositif de soupape de réglage (74) qui possède l'élément formant soupape pouvant être mis en rotation (75) afin de modifier l'angle réel et/ou la forme du passage d'admission respectif (43).

5. Moteur à combustion interne selon l'une au moins des revendications précédentes 1 à 4, caractérisé en ce que chaque élément formant soupape (75) pouvant être mis en rotation à environ 180° à partir d'une position dans laquelle les surfaces cylindriques des éléments formant soupapes (75) font saillie dans les passages d'admission (43) en modifiant la configuration et la zone de section transversale réelle de ces passages d'admission (43) et en décalant leur axe d'écoulement central vers un côté des sièges de soupape d'admission (46), et d'une position dans laquelle des parties découpées (77) prévues sur ledit élément formant soupape (75) correspondent aux passages d'admission (43) en les laissant libres et en déplaçant l'axe d'écoulement davantage vers le centre des sièges de soupape d'admission (46).

6. Moteur à combustion interne selon l'une au moins des revendications précédentes 1 à 5, caractérisé en ce que les extrémités aval des éléments formant soupapes de réglage (75) sont dotées d'une zone arrondie (78) pour ménager une partie de flux transitionnel depuis la section droite du passage d'admission (43) vers ladite partie (47) se réunissant à un siège de soupape d'admission (46).

7. Moteur à combustion interne selon l'une au moins des revendications précédentes 1 à 6, caractérisé en ce que les éléments formant soupape de réglage (75) sont configurés de manière à diriger le flux de charge vers la chambre à combustion davantage vers son centre au moyen de découpures ou de plats (151) disposés sur les parties cylindriques des éléments formant soupapes (75).

8. Moteur à combustion interne selon la revendication 7, caractérisé en ce que les découpures ou plats (151) de deux éléments formant soupapes adjacents (75) faisant partie des passages d'admission (43) qui alimentent la même chambre de combustion (29) sont disposés sur les parties cylindriques de ces éléments formant soupapes de réglage (75) en angle les uns par rapport aux autres.

9. Moteur à combustion interne selon l'une au moins des revendications précédentes 1 à 8, caractérisé en ce que les éléments formant soupape de réglage (75) comprennent généralement des parties cylindriques (79) à leurs extrémités amont qui sont tourillonnées dans des alésages adéquats d'un support de soupape de réglage et un dispositif d'actionnement (41) adjacents aux passages d'admission (81).

10. Moteur à combustion interne selon la revendication 9, caractérisé en ce que les parties cylindriques amont (79) des éléments formant soupapes (75) sont formées avec des dents à renvoi à engrenage droit qui sont en prise avec les dents (82) d'une crémaillère cylindrique (83) qui est légèrement supportée dans un alésage (84) s'étendant transversalement à travers le support de soupape de réglage et l'élément d'actionnement (41).

11. Moteur à combustion interne selon la revendication 10, caractérisé en ce que la crémaillère cylindrique (83) est activée par un moteur pas-à-pas (92) au moyen d'un actionneur de commande Bowden (92), ledit moteur pas-à-pas (92) est commandé par un moyen de commande (95).

12. Moteur à combustion interne selon l'une au moins des revendications précédentes 1 à 11, caractérisé en ce qu'une soupape de réglage d'échappement (101) est prévue en étant actionnée par ledit moteur pas-à-pas (92) à partir du moyen de commande (95).

13. Moteur à combustion interne selon l'une au moins des revendications précédentes 1 à 12, caractérisé en ce qu'une plaque de redressement (201) est prévue conjointement avec les sièges de soupape (46) des soupapes d'admission, ladite plaque de redressement (201) comprend une partie (202) qui forme une extension de la partie cylindrique des éléments formant soupape de réglage (75) lorsque ceux-ci sont dans leur position fermée, ladite plaque de redressement subdivisant le passage d'écoulement des passages d'admission (43) en une première et une deuxième parties qui dirigent l'écoulement de la charge d'admission seulement pour l'une des parties lorsque l'élément formant soupape de réglage (75) est dans sa position fermée obstruant le flux.
